# EUROPEAN PATENT SPECIFICATION

(11) **EP 3 824 181 B1**
(45) Date of publication and mention of the grant of the patent: **29.11.2023**
(21) Application number: 19761745.9
(22) Date of filing: 09.08.2019
(51) Int. Cl.: F03D 80/70, F03D 80/80, F03D 13/40

(54) **TREATING A WIND TURBINE DRIVE TRAIN**
BEHANDLUNG EINES ANTRIEBSSTRANGS EINER WINDTURBINE
TRAITEMENT D'UN TRAIN D'ENTRAÎNEMENT DE TURBINE ÉOLIENNE

(30) Priority: 06.09.2018 EP 18193054
(43) Date of publication of application: 26.05.2021
(73) Proprietor: Siemens Gamesa Renewable Energy A/S, 7330 Brande (DK)
(72) Inventor: HAWKINS, Samuel H., 7100 Vejle (DK)
(74) Representative: SGRE-Association
(86) International application number: PCT/EP2019/071422
(87) International publication number: WO 2020/048732

(56) References cited:
- EP-B1- 2 909 472
- WO-A2-2004/083630
- US-A1- 2008 181 761
- US-A1- 2015 159 625

## Description

### Field of invention

The present invention relates to a method and an arrangement of treating a bearing system comprised in a wind turbine drive train during storage and/or transport, the drive train comprising a rotor coupled to a generator. Furthermore, the present invention relates to a method of storing and/or transporting a wind turbine arrangement comprising a drive train with a rotor, a generator coupled to the rotor, a bearing system rotatably supporting at least one component of the drive train and an auxiliary converter system.

### Art Background

WO 2004/083630 A2 discloses a method of moving the rotating means of a wind turbine during transportation or standstill. An auxiliary device is connected to the rotating means of the wind turbine. The auxiliary device transfers energy to said one or more shafts of the rotating means during transportation and moves thereby one or more shafts of the rotating means. The auxiliary device is controlled with output signals of a control and monitoring system in order to move the rotating means of the wind turbine during transportation or standstill.

A wind turbine comprises a number of movable parts that need to be rotatably supported by one or more bearings. In particular, a drive train of the wind turbine comprises a rotor at which plural rotor blades are connected and which rotor is coupled to the electric generator. The rotor may for example be rotatably supported by a main rotor bearing, for example between the hub at which the blades are connected and the generator. In general, the drive train may comprise a number of bearing portions. A bearing system may thus comprise several bearing portions supporting several components of the drive train. The drive train may or may not comprise a gearbox which is connected to a (e.g. primary) rotor and which is at an output section connected to another (e.g. secondary) rotor which may be coupled to the generator.

Once a wind turbine is assembled, or partially assembled, the bearings which are a part of the drive train are under a load which puts pressure on the contact points within the bearings. The loading has multiple sources which can include the weight of the supported components as well as geometrical constraints on the assembly as multiple components are fastened together. The contact points can be between the elements of the bearing which may include rollers and raceways in a roller bearing design or balls and raceways in a ball bearing design. Other types of contact points within the bearings may exist. Generally, the pressure between these points is increased once the bearings are a part of an assembly compared to when they are unmounted.

Due to this pressure between the contact points, the bearings are at risk of damage during transportation and storage due to small vibrations which are inflicted upon the bearings due to either the environment (wind and earth related motion) or due to transportation activity.

When small vibrations occur, the contact points within the bearings migrate through the thin layer of lubricant (grease) which separates metal surfaces. These vibrations may then lead to damage called "false-brinelling" which may be caused by the relative oscillating motion of the metal surfaces when under contact pressure. Another common term for this type of damage is "stand-still marks". This kind of damage may significantly reduce the lifetime of the bearing. As a result, the bearing must be replaced before the lifetime of the wind turbine is complete adding significant operational costs to a wind turbine operator. This problem arises on wind turbines with multiple bearings or only a single generator bearing (e.g. rotor main bearing). Also, on wind turbines equipped with a gearbox, a similar damage mode may occur between the contact points on gear teeth. Again, stand-still marks may evolve and may lead to failed components due to the same vibrations experienced during storage and transportation.

EP 2 909 472 B1 discloses the use of hydraulic pistons to exercise bearings and other drive train components. A negative impact for large bearings or gearboxes which are mounted with their rotating axis horizontally is that the back and forth motion may cause grease and oil to settle in low areas due to gravity. This may remove lubricant from the upper parts of the components and may lead to corrosion and other damage types.

Other systems of the prior art utilize rollers powered by electric motors which rotate the generator or other part of the wind turbine. A disadvantage is that by the rollers, the surface of the generator may be damaged. Furthermore, the system is expensive due to multiple moving parts and motors.

Other systems employ multiple motors and rollers/gears to turn the heavy direct drive generator.

US 2008/0181761 A1 discloses methods and systems for turning rotary components within rotary machines, wherein a turning gear assembly is provided.

It has, however, been observed that the conventional systems and methods have several drawbacks.

Thus, there may be a need for a method and an arrangement of treating a bearing system comprised in a wind turbine drive train during storage and/or transport, wherein the method and arrangement is simplified compared to the conventional methods and systems and ensures a reliable and safe operation.

### Summary of the Invention

This need may be met by the subject matter according to the independent claims. Advantageous embodiments of the present invention are described by the dependent claims.

According to an embodiment of the present invention it is provided a method of treating a bearing system comprised in a wind turbine drive train during storage and/or transport, the drive train comprising a rotor coupled to a generator, the method comprising: controlling the generator (e.g. to operate as a motor) to deliver a driving torque causing the rotor to rotate about at least one half or at least one revolution, in particular more than 100, or more than 1000 revolutions.

The wind turbine drive train may comprise portions of the hub at which plural rotor blades may be connected, may comprise the rotor which is connected to the hub, may comprise the generator and optionally also a gearbox installed between the hub and the generator. Furthermore, the drive train comprises the bearing system. The bearing system is adapted to support components of the wind turbine drive train, in particular to rotatably support components of the drive train relative to static components. The bearing system may for example comprise a rotor main bearing, i.e. a bearing which rotatably supports the rotor which is connected to the hub and to the generator. The rotor main bearing may for example be arranged between the hub and the generator. In case the drive train comprises a gearbox, a primary rotor which is connected to the hub needs to be supported by a bearing portion as well as a secondary rotor connected to an output section of the gearbox (and to the generator) needs to be rotatably supported by a bearing portion. Furthermore, the gearbox itself may comprise several gearbox bearing portions and also gear wheels comprising lubricant. Furthermore, the bearing system may comprise a generator bearing, thus a bearing which rotatably supports a generator rotor relative to a generator stator. An individual generator bearing may in particular be present if the wind turbine drive train comprises a gearbox. In case of a direct drive wind turbine (in which no gearbox is present), the generator bearing may correspond to the rotor main bearing. Other configurations may be possible. The bearing system may comprise one or more further bearing portions.

The bearing system may comprise all bearing portions which rotatably support components which rotate due to the rotation of the main rotor. The bearing system may, during storage and/or transport, be at risk to be damaged when standing still for a long period of time.

The generator may be controlled to deliver the driving torque by supplying to the generator suitable driving signals or a driving (power) stream. Thereby, the generator operates as a motor, thus consuming electric energy and generating mechanical energy, in particular rotational energy. Since the rotor is part of the drive train, the whole drive train will be driven by rotating the generator thereby also actuating the bearing system.

When the rotor is caused by the generator to rotate about at least one half or at least one revolution, the lubricant or grease within bearing portions of the bearing system may be distributed across functional surfaces comprised within the bearing portions, in order to reduce damage which would otherwise occur during stand-still.

Beside the (e.g. wind turbine main) generator, no further actuator may be needed to perform the method, thereby simplifying the method. Merely, the generator needs to be properly controlled or provided with driving signals. No mechanical installations of further auxiliary equipment may be required, thus simplifying the method and a corresponding arrangement and reducing costs.

When the rotor is caused to rotate about plural revolutions, such as more than 100 or more than 1000 revolutions, the distribution of the grease and lubricant may become even more even and also the load experienced over a period of time at different contact points within the bearing portions may become substantially equal, thereby also equilibrating the loads on the bearing portions.

According to an embodiment of the present invention, by rotating the rotor at least one roller and/or ball is moved relative to a raceway of at least one component of the bearing system, and/or wherein the generator generated driving torque continuously or/or in a stepwise manner and/or in back and forth manner rotates the rotor during at least 20%, in particular between 50% and 100%, of the transport time and/or storage time.

Each bearing portion of the bearing system may comprise at least one raceway relative to which at least one roller or at least one ball moves when the raceway is rotated relative to another raceway, wherein between the raceway and the other raceway, the at least one roller or the at least one ball may be arranged. By rotating the roller or the ball relative to the raceway, the load on the respective component of the bearing system may be equally distributed and/or the lubricant or grease may be evenly distributed along the raceway. When the rotor rotates during a relatively long fraction of the transport time or the storage time, the likelihood that standstill marks will occur is reduced because there is more likely to be a film of lubricant between contact surfaces.

The rotation may be performed continuously (without stand-still), in a stepwise manner (including time periods of movement and stand-still) and/or back and forth depending on the particular application. Stepwise rotation may reduce energy required for the rotation.

The rotation may be relatively slow, in particular at a predetermined rotational speed, in particular between 0.1 rpm and 5 rpm, further in particular between 1 rpm and 2 rpm. Thereby, effective equilibration of the loads and distribution of lubricant on different contact points within the component of the bearing system may be achieved as well as a safe operation may be ensured, while the energy need may be relatively small.

A driving power stream from an auxiliary converter system may be supplied to the generator. The generator may, while performing the method, be decoupled, in particular electrically disconnected, from any other circuitry to which it is connected during normal operation to produce electric energy from wind energy. The auxiliary converter system may exclusively be supplying the driving power stream to the generator when the generator together with the drive train (for example comprised in a nacelle) is stored or transported. The auxiliary converter system may be a relatively small, inexpensive system having a relatively small weight. The auxiliary converter system may act like a motor controller system, as is known in the conventional art. By supplying the driving power stream to the generator, the generator may be operated as a motor for generating the driving torque. During normal operation while generating electric energy, the generator may be operated in a generator mode, converting rotational energy (of hub and rotor) into electric energy.

According to an embodiment of the present invention, the auxiliary converter system comprises an auxiliary frequency converter which is powered by an external power supply, in particular a transport system power supply, further in particular a vessel power supply, wherein in particular a three phase AC power stream having a predetermined frequency, further in particular 50 Hz or 60 Hz, is supplied to the auxiliary frequency converter.

The external power supply may for example comprise a battery, an accumulator or a diesel combustion engine coupled with a power supply generator, for example. The external power supply may for example deliver 3 x 400 V, for example from a vessel energy supply system. In other embodiments, the external power supply may provide less or more electric phases at smaller or greater voltage. The auxiliary frequency converter may be configured to convert the frequency of the external power supply to a desired frequency at which the generator is desired to be operated. Thereby, the rotational speed at which the generator is operated can be chosen on demand.

According to an embodiment of the present invention, the auxiliary frequency converter comprises controllable switches connected between DC-terminals at an input section and comprises further controllable switches connected between DC-terminals at an output section, wherein conductance states of the controllable switches and the further controllable switches are controlled by an auxiliary converter controller supplying control signals, in particular pulse width modulation signals, to gates of the controllable switches and the further controllable switches.

The controllable switches may comprise for example respective transistors, such as IGBTs. The auxiliary converter controller may generate the pulse width modulation signals such as to achieve a particular frequency and power and voltage at the output terminals of the auxiliary frequency converter which terminals are connected to the generator.

According to an embodiment of the present invention, the auxiliary converter system is different from (and e.g. additional to) a wind turbine converter or comprises at least one wind turbine converter connectable to the generator and used during normal operation of the wind turbine, to convert a variable frequency power stream, generated by the generator due to wind impacting on rotor blade connected to the rotor, to a substantially fixed frequency power stream to be delivered to a utility grid, in particular via one of more transformers, wherein the auxiliary converter system has a capacity of between 1% and 20% of a capacity of each wind turbine converter.

Typically, the wind turbine converter has a relatively large capacity or power rating, since it is designed for providing at its output terminal a high power stream to be delivered to a utility grid. Compared to this relatively high capacity or rating, the capacity of the auxiliary converter system may be relatively small, since it is only intended to cause a relatively small rotation of the generator during transport and/or storage without requiring extensive power or energy. Thus, it may be advantageous to provide an additional auxiliary converter system additional and different from the at least one wind turbine converter.

In other embodiments, however, the (already existing) wind turbine converter may be utilized to also drive the generator to operate in the motor mode for rotating the generator, thereby moving parts of the drive train for appropriately treating the bearing system. In this embodiment, only conventional hardware of a conventional wind turbine may be required. Only the wind turbine converter may be needed to be appropriately controlled by a respective control algorithm, such as a control program.

According to an embodiment of the present invention, the bearing system comprises at least one of: a primary and/or secondary rotor main bearing; a gear box bearing; a generator bearing. The bearing system may comprise more portions. Thereby, all kinds of movable portions of the bearing system may advantageously be treated during transport and/or storage, for increasing the lifetime of the bearing system.

According to an embodiment of the present invention, the method is performed during transport of a nacelle loaded on a transport frame, the nacelle comprising the generator, the rotor, the drive train and the bearing system, the auxiliary converter system being in particular arranged in or at the nacelle or at the transport frame.

The nacelle may comprise, beside the auxiliary converter system, all components needed to perform the method. In other embodiments, only a generator may be stored or transported, wherein also the generator may comprise the generator bearing and is part of the drive train. Thus, very complex and cost-extensive parts of the wind turbine may be stored and transported, while taking care of the bearing system.

According to an embodiment of the present invention, the nacelle further comprises: at least one wind turbine converter, in particular multiple wind turbine converters in case of a multiple winding set generator, each one of the wind turbine converters connectable to the generator.

The wind turbine converter or wind turbine converters may be configured to convert a variable frequency power stream output by the generator during normal operation of energy production to a substantially fixed frequency (for example 50 Hz or 60 Hz) power stream to be supplied to a utility grid.

According to an embodiment of the present invention, each one of the wind turbine converters is connectable to the generator via a respective generator breaker (e.g. a switch), wherein during the method the (in particular all) generator breakers are opened.

During performing the method, the generator breakers are open such that the generator coupled to the auxiliary converter system is decoupled and disconnected from all other circuitries to which the generator is connected during normal operation while producing electric energy. Thereby, this further circuitry is not damaged (and/or does not interfere) during transport and/or storage and during performing the method.

According to an embodiment of the present invention, the generator is a single winding set generator or a multiple winding set generator, wherein in case of a multiple winding set generator, the auxiliary converter system is connected to only one winding set of the generator. When the auxiliary converter system is connected to only one winding set of the generator, the complexity of the method and the respective arrangement may be reduced, while the bearing system is taking care of in a reliable manner.

According to an embodiment of the present invention, the generator is a permanent magnet synchronous generator, in particular having an outer rotor with plural permanent magnets, or is an induction generator. Thereby, multiple types of generators may be supported.

According to an embodiment of the present invention it is provided a method of storing and/or transporting a wind turbine arrangement comprising a drive train with a rotor, a generator coupled to the rotor, a bearing system rotatably supporting at least one component of the drive train, and an auxiliary converter system, comprising performing a method according to one of the preceding embodiments. Thereby, the wind turbine arrangement may securely be stored or/and transported thereby reducing risk of damage of the bearing system.

It should be understood, that features, individually or in any combination, disclosed, described or explained with respect to a method of treating a bearing system comprised in a wind turbine drive train during storage and/or transport are also applicable, individually or in any combination, to an arrangement for treating a bearing system comprised in a wind turbine drive train during storage and/or transport according to embodiments of the present invention and vice versa.

According to an embodiment of the present invention it is provided an arrangement for treating a bearing system comprised in a wind turbine drive train during storage and/or transport, the drive train comprising a rotor coupled to a generator, the arrangement comprising: a driving system, in particular an auxiliary converter system, connected to control the generator, in particular to operate as a motor, to deliver a driving torque causing the rotor to (e.g. slowly and/or e.g. continuously) rotate for/about at least one half or at least one revolution, the arrangement in particular comprising a nacelle, the driving system in particular comprising an auxiliary converter system.

Furthermore, a wind turbine including the entire arrangement is provided.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Fig. 1 schematically illustrates an arrangement for treating a bearing system comprised in a wind turbine drive train during storage and/or transport according to an embodiment of the present invention;
Fig. 2 schematically illustrates a nacelle during storage or transport at which a method of treating a bearing system comprised in a wind turbine drive train is performed according to an embodiment of the present invention;
Fig. 3 illustrates in a schematic manner an auxiliary converter system which may be employed in methods or arrangements according to embodiments of the present invention; and
Fig. 4 illustrates a graph for selecting a rotational speed to be applied for rotation of the rotor during storage and/or transport according to an embodiment of the present invention.

### Detailed Description

Embodiments of the present invention protect the bearing portions of a bearing system and other parts of the drive train by using the wind turbine's own generator to rotate. During storage or transport, power is delivered to the generator so that it acts as a motor. This power is used to rotate the drive train slowly and for example continuously in order to ensure that the lubrication film is always present between contact surfaces within the bearing or between the teeth of a gearbox. The power may be delivered through a frequency converter to the synchronous permanent magnet generator. The frequency converter may control the frequency of the power delivered to ensure a slow and continuous rotation. In particular, a stand-alone frequency converter may be used which plugs directly into the electrical connection to the generator. Electrical breakers may prevent any of the electrical voltage or current from being delivered to other parts of the wind turbine.

During storage or transport, parts of the wind turbine's electrical system may not be completed or commissioned. It may therefore be necessary in this configuration to make sure that power is only delivered to the generator. This interface between the frequency converter and the generator can either be temporary or a permanent part of the wind turbine design.

The turning tool may be used either occasionally or continuously or in a stepwise manner from the time the drive train is assembled until installation takes place, including road and/or sea transportation. This may ensure that a lubrication film is always present and will significantly reduce the development of stand-still marks in the bearings and other parts of the drive train.

By using the generator of the wind turbine to rotate the bearings and other parts of the drive train, there is no need for a mechanical tool or interface to the rotating part of the drive train. This may reduce the cost of producing the wind turbine, since there is no need to design an interface (such as mounting positions for a rotation tool or gear teeth on rotating parts).

Furthermore, the cost of the frequency drives has gone down significantly in the last 20 years which may enable them to be purchased at a low cost for this application. By using a frequency converter, the output frequency can be controlled and the rotational speed of the generator can therefore be adjusted as needed. Thus, a slow, energy-efficient and safe rotational speed can be adjusted. Because the system also consists of a frequency converter it is very simple to maintain by just replacing one unit with another one.

For a conventional mechanical solution there are multiple moving parts which may wear or fail. This conventional solution may require maintenance. Because maintenance may not always take place when needed, the result may be that bearings or other parts of the drive train may suffer from damage. The cost of replacing a damaged direct drive generator bearing offshore is extraordinary expensive.

Embodiments of the present invention are applicable for direct drive train wind turbines but also for wind turbines which use a different generator design or drive train configuration (for example an inductive machine with a gearbox). The turning tool would work in the same way and be connected directly to the generator and powered externally. The auxiliary converter system may be powered either by an external supply or could use batteries to provide power to the frequency converter.

Conventional methods may have used the generator for "rotor positioning", thus to achieve a target position of the wind turbine rotor. However, these methods and arrangements are different from embodiments of the present invention, since the purpose and use of the generator is here not for positioning of the rotating part of the turbine at a particular angle, but instead in particular for continuous rotation for the purpose of protecting the bearing during transport and storage. In particular, at least one half or at least one revolution is turned in order to ensure equal distribution of lubricant within the bearing components.

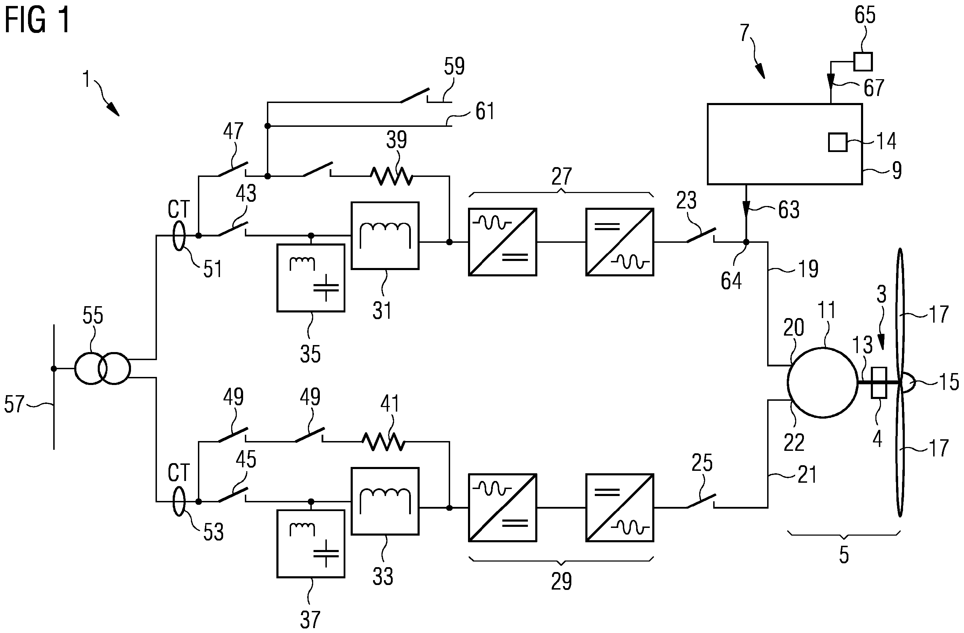

The arrangement 1 illustrated in Fig. 1 for treating a bearing system 3 comprised in a wind turbine drive train 5 during storage and/or transport according to an embodiment of the present invention comprises a driving system 7, in particular an auxiliary converter system 9, connected to control the generator 11, in particular to operate as a motor, to deliver a driving torque causing the rotor 13 to rotate about at least one half revolution. Thereby, the rotor 13 is rotatably supported by the bearing system 3, in particular comprising a rotor main bearing 4. The rotor 13 is mechanically connected to the hub 15 at which plural rotor blades 17 are connected.

The generator 11 is in the illustrated embodiment configured as a two winding set generator having independent (in particular three-phase) winding sets 19 and 21 which lead to, via generator circuit breakers 23, 25, respective wind turbine converters 27, 29 which are configured as AC-DC-AC converters. The output power streams of the wind turbine converters 27, 29 are supplied, respectively, to reactors 31, 33 followed by harmonics filters 35, 37, wherein charging resistor 39, 41 are connected in parallel. Furthermore, several breakers, such as a main circuit breakers 43, 45, respective auxiliary circuit breakers 47, 49 allow interruption of the respective power streams.

Furthermore, the output power streams are transformed to a higher voltage using respective converter transformers 51, 53 and additionally a wind turbine transformer 55. The output power stream is delivered to a utility grid 57, in particular via a point of common coupling and one or more additional wind park transformers. Furthermore, a diesel generator inlet 59 as well as an auxiliary motor controller input 61 allow to supply external energy to the wind turbine 1.

In particular, the arrangement 1 is configured as a wind turbine. Different from a conventional wind turbine or nacelle or generator, the arrangement 1 comprises the driving system 7 which is configured to control the generator 11 to deliver a torque causing the rotor 13 to rotate for at least one half revolution. Thereby, the driving system 7 is configured as an auxiliary converter system 9 which outputs a three-phase AC power stream 63 which causes the generator 11 to act as a motor rotating at a predetermined rotational speed. The auxiliary converter system 9 is powered by the external power supply 65 which delivers a three-phase AC power stream 67, for example at a frequency of 50 Hz or 60 Hz.

The auxiliary converter system 9 comprises an auxiliary converter controller 14 supplying control signals to not illustrated controllable switches for controlling their conductance states.

As can be seen from Fig. 1, the auxiliary frequency converter 9 is different and additional to the (wind turbine) frequency converters 27 and 29. The bearing system 3 comprises in the illustrated embodiment a rotor main bearing 4 rotatably supporting the main rotor 13 at which the hub 15 and the rotor blades 17 are connected. In other embodiments, there may be a gearbox connected between the hub 15 and the generator, wherein the gearbox may include further components of the bearing system which are also rotated by rotating the shaft 13 connected to the generator 11 according to embodiments of the present invention.

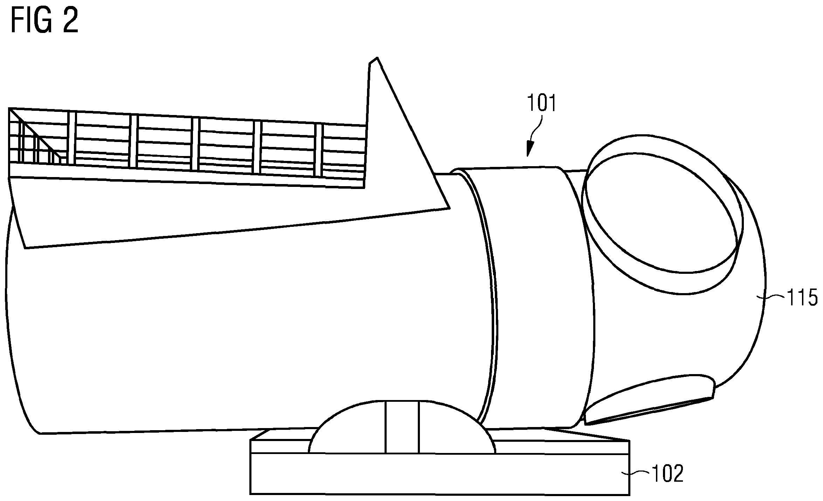

Fig. 2 schematically illustrates a nacelle 101 as an example of the arrangement 1 illustrated in Fig. 1 during transport. The nacelle 101 is loaded on a transport frame 102, while a method according to an embodiment is performed. Thereby, the nacelle may for example comprise all elements illustrated in Fig. 1 except the wind turbine transformer 55 and the utility grid 57 and in some embodiments except the driving system 7. Furthermore, the nacelle does not comprise the rotor blades 17 illustrated in the Fig. 1. The driving system 7 may be placed at another loading area of the transport frame 102 or may, in other embodiments, placed inside the nacelle 101.

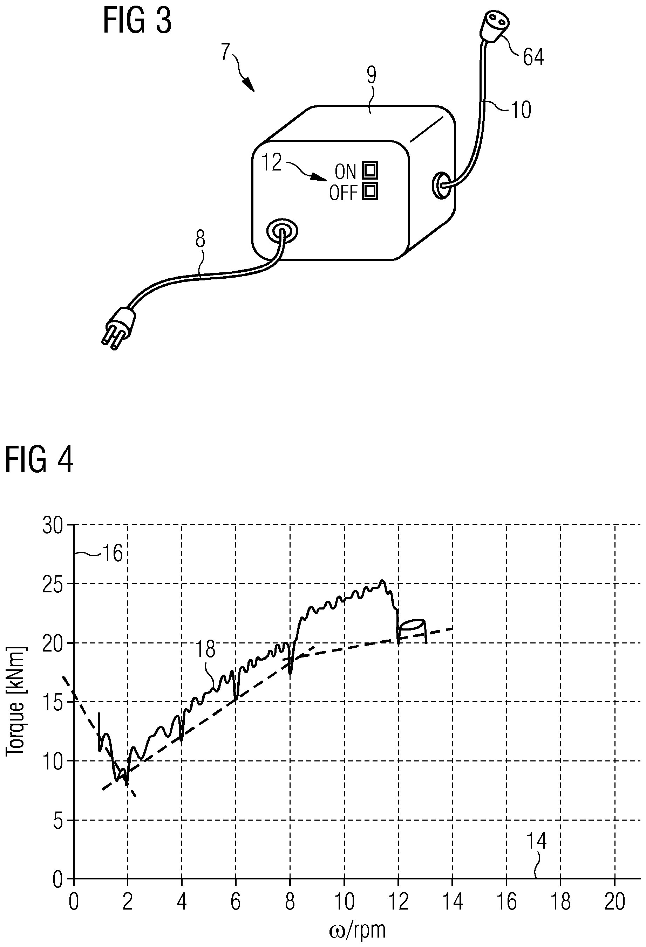

Fig. 3 schematically illustrates a driving system 7 configured as a frequency converter 9 which may be utilized in the arrangement 1 illustrated in Fig. 1. The driving system 7 comprises a delivery cable 8 for delivering energy for example from an external energy supply. Furthermore, the driving system 7 comprises an output cable 10 configured to output an AC power stream having a desired or predetermined frequency and to be connected vie the connection interface 64 leading to the generator 11 (see for example Fig. 1).

The driving system may be configured in a simple manner only having an on-off switch 12 enabling to turn on the driving system or to turn off the driving system. During transport and/or storage of a wind turbine portion comprising a bearing coupled directly or indirectly to the rotor, the driving system may be turned on.

Fig. 4 illustrates a graph 18 in a coordinate system having an abscissa 14 indicating the rotational speed w in units of rpm and having an ordinate 16 indicating the torque T required to achieve the respective rotational speed. At a rotational speed ω at about 2 rpm, the torque T required for turning the generator is smallest. For safety reasons, still a smaller rotational speed of about 1 rpm is chosen for turning the rotor using the generator 11 during transport and/or storage. The predetermined rotational speed may be determined based on the particular application and need.

The driving system, in particular frequency converter 7, 9, may be placed in an easily accessible location within the nacelle or at or on the transport frame 102. The frequency converter 9 may be powered by the external power supply 65 which may for example supply 3 x 400 V from a vessel supply system. The frequency converter 9 is connected to the terminals 20 of one winding set 19 of the generator 11 through a quick connect interface 64 at one side of the generator circuit breaker 23. When activated using the switch 12 for example, the frequency converter 7 delivers a low frequency AC power sufficient to rotate the generator slowly and steadily for example at 1 rpm. In other embodiments, the driving system or frequency converter 7 may include an emergency stop button and speed select button or wheel.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of treating a bearing system (3) comprised in a wind turbine drive train (5) during storage and/or transport, the drive train (5) comprising a rotor (13) coupled to a generator (11), the method comprising:
controlling the generator (11) to deliver a driving torque causing the rotor (13) to rotate about at least one half revolution or at least one revolution, in particular more than 100, or more than 1000 revolutions,
wherein controlling the generator comprises:
supplying a driving power stream (63) from an auxiliary converter system (7, 9) to the generator (11).

2. Method according to the preceding claim,
wherein by rotating the rotor (13) at least one roller and/or ball is moved relative to a raceway of at least one component of the bearing system (3), and/or
wherein the generator generated driving torque continuously and/or in a stepwise manner and/or in a back and forth manner rotates the rotor during at least 20 %, in particular between 50 % and 100 %, of the transport time and/or storage time.

3. Method according to one of the preceding claims, wherein the generator generated driving torque rotates the rotor (13) with a predetermined rotational speed, in particular between 0.1 rpm and 5 rpm, further in particular between 1 rpm and 2 rpm.

4. Method according to one of the preceding claims, wherein the auxiliary converter system (7) comprises an auxiliary frequency converter (9) which is powered by an external power supply (65), in particular transport system power supply, further in particular vessel power supply,
wherein in particular a three phase AC power stream (67) having a predetermined frequency, further in particular 50 Hz or 60 Hz, is supplied to the auxiliary frequency converter (9) .

5. Method according to one of the preceding claims, wherein the auxiliary frequency converter (9) comprises controllable switches connected between DC-terminals at an input section and comprises further controllable switches connected between DC-terminals at an output section, wherein conductance states of the controllable switches and the further controllable switches are controlled by an auxiliary converter controller (14) supplying control signals, in particular pulse width modulation signals, to gates of the controllable switches and the further controllable switches.

6. Method according to one of the preceding claims, wherein the auxiliary converter system (9) is different from (additional to) or comprises at least one wind turbine converter (27, 29) connectable to the generator (11) and used during normal operation of the wind turbine, to convert a variable frequency power stream, generated by the generator due to wind impacting on rotor blade connected to the rotor, to a substantially fixed frequency power stream to be delivered to a utility grid, in particular via one of more transformers,
wherein the auxiliary converter system (9) has a capacity of between 1% and 20% of a capacity of each wind turbine converter (27, 29).

7. Method according to one of the preceding claims, wherein the bearing system (3) comprises at least one of:
a primary and/or secondary rotor main bearing (4);
a gear box bearing;
a generator bearing.

8. Method according to one of the preceding claims, wherein the method is performed during transport of a nacelle (101) loaded on a transport frame (102), the nacelle comprising the generator (11), the rotor (13), the drive train (5) and the bearing system (3),
the auxiliary converter system (9) being in particular arranged in or at the nacelle or at the transport frame.

9. Method according to the preceding claim, wherein the nacelle further comprises:
at least one wind turbine converter (27, 29), in particular multiple wind turbine converters in case of a multiple winding set generator, each one of the wind turbine converters connectable to the generator (11).

10. Method according to the preceding claim, wherein each one of the wind turbine converters (27, 29) is connectable to the generator via a respective generator breaker (23, 25), wherein during the method the generator breakers are opened.

11. Method according to one of the preceding claims, wherein the generator is a single winding set generator or a multiple winding set generator (11), wherein in case of a multiple winding set generator, the auxiliary converter system (9) is connected to only one winding set (19) of the generator (11).

12. Method according to one of the preceding claims, wherein the generator is a permanent magnet synchronous generator, in particular having an outer rotor with plural permanent magnets, or an induction generator.

13. Method of storing and/or transporting a wind turbine arrangement (1, 101) comprising a drive train (5) with a rotor (13), a generator (11) coupled to the rotor, a bearing system (3) rotatably supporting at least one component of the drive train, and an auxiliary converter system (7, 9), comprising performing a method according to one of the preceding claims.

14. Arrangement (1) for treating a bearing system (3) comprised in a wind turbine drive train (5) during storage and/or transport, the drive train comprising a rotor (13) coupled to a generator (11), the arrangement comprising:
a driving system (7), comprising an auxiliary converter system (9), connected to control, by supplying a driving power stream (63) to the generator (11), to operate as a motor, to deliver a driving torque causing the rotor (13) to rotate about at least one revolution, the arrangement in particular comprising a nacelle (101).

## Patentansprüche

1. Verfahren zum Behandeln eines Lagersystems (3), das in einem Antriebsstrang (5) einer Windturbine enthalten ist, während des Aufbewahrens und/oder des Transports, wobei der Antriebsstrang (5) einen Rotor (13) umfasst, der an einen Generator (11) gekoppelt ist, wobei das Verfahren Folgendes umfasst:
Steuern des Generators (11), um ein Antriebsmoment zu liefern, das den Rotor (13) veranlasst, sich um mindestens eine halbe Umdrehung oder mindestens eine Umdrehung, insbesondere mehr als 100 oder mehr als 1000 Umdrehungen zu drehen,
wobei das Steuern des Generators Folgendes umfasst:
Zuführen eines Antriebsleistungsstroms (63) von einem Hilfsumsetzersystem (7, 9) zu dem Generator (11).

2. Verfahren nach dem vorhergehenden Anspruch, wobei durch Drehen des Rotors (13) mindestens eine Walze und/oder eine Kugel relativ zu einer Laufbahn mindestens einer Komponente des Lagersystems (3) bewegt wird, und/oder wobei das durch den Generator erzeugte Antriebsmoment den Rotor während mindestens 20 %, insbesondere zwischen 50 % und 100 %, der Transportzeit und/oder der Aufbewahrungszeit kontinuierlich und/oder schrittweise und/oder hin und her dreht.

3. Verfahren nach einem der vorhergehenden Ansprüche, wobei das von dem Generator erzeugte Antriebsmoment den Rotor (13) mit einer vorgegebenen Drehzahl, insbesondere zwischen 0,1 min⁻¹ und 5 min⁻¹, ferner insbesondere zwischen 1 min⁻¹ und 2 min⁻¹, dreht.

4. Verfahren nach einem der vorhergehenden Ansprüche, wobei das Hilfsumsetzersystem (7) einen Hilfsfrequenzumsetzer (9) umfasst, der durch eine externe Leistungsversorgung (65), insbesondere eine Transportsystem-Leistungsversorgung, ferner insbesondere eine Schiffs-Leistungsversorgung, angetrieben wird, wobei insbesondere ein dreiphasiger Wechselleistungsstrom (67), der eine vorgegebene Frequenz aufweist, ferner insbesondere 50 Hz oder 60 Hz, dem Hilfsfrequenzumsetzer (9) zugeführt wird.

5. Verfahren nach einem der vorhergehenden Ansprüche, wobei der Hilfsfrequenzumsetzer (9) steuerbare Schalter umfasst, die zwischen Gleichstrom-Anschlüssen an einem Eingangsabschnitt angeschlossen sind, und ferner steuerbare Schalter umfasst, die zwischen Gleichstrom-Anschlüssen an einem Ausgangsabschnitt angeschlossen sind, wobei Leitungszustände der steuerbaren Schalter und der weiteren steuerbaren Schalter durch eine Steuerung (14) des Hilfs-Umsetzers gesteuert werden, die Steuersignale, insbesondere Pulsweitenmodulationssignale, zu Gattern der steuerbaren Schalter und der weiteren steuerbaren Schalter zuführt.

6. Verfahren nach einem der vorhergehenden Ansprüche, wobei sich das Hilfsumsetzersystem (9) von dem mindestens einen Windturbinenumsetzer (27, 29) unterscheidet oder (zusätzlich) mindestens einen Windturbinenumsetzer (27, 29) umfasst, der mit dem Generator (11) verbunden werden kann und während des Normalbetriebs der Windturbine verwendet wird, um einen Leistungsstrom mit variabler Frequenz, der durch den Generator aufgrund von Wind erzeugt wird, der auf die Rotorblätter, die mit dem Rotor verbunden sind, auftrifft, in einen Leistungsstrom mit im Wesentlichen fester Frequenz umzusetzen, der zu einem Versorgungsnetz geliefert werden soll, insbesondere über einen der mehreren Transformatoren,
wobei das Hilfsumsetzersystem (9) eine Kapazität von 1 % bis 20 % einer Kapazität jedes Windturbinenumsetzers (27, 29) aufweist.

7. Verfahren nach einem der vorhergehenden Ansprüche, wobei das Lagersystem (3) mindestens eines der folgenden Lager umfasst:
ein primäres und/oder sekundäres Rotor-Hauptlager (4);
ein Getriebelager;
ein Generatorlager.

8. Verfahren nach einem der vorhergehenden Ansprüche, wobei das Verfahren während des Transports einer Maschinengondel (101), die auf einen Transportrahmen (102) geladen ist, durchgeführt wird, wobei die Maschinengondel den Generator (11), den Rotor (13), den Antriebsstrang (5) und das Lagersystem (3) umfasst, wobei das Hilfssystem (9) insbesondere in oder an die Maschinengondel oder an dem Transportrahmen angeordnet ist.

9. Verfahren nach dem vorhergehenden Anspruch, wobei die Maschinengondel ferner Folgendes umfasst:
mindestens einen Windturbinenumsetzer (27, 29), insbesondere mehrere Windturbinenumsetzer in dem Fall eines Generators mit mehreren Wicklungssätzen, wobei jeder der Windturbinenumsetzer mit dem Generator (11) verbunden werden kann.

10. Verfahren nach dem vorhergehenden Anspruch, wobei jeder der Windturbinenumsetzer über einen entsprechenden Generatorunterbrecher (23, 25) mit dem Generator (11) verbunden werden kann,
wobei während des Verfahrens die Generatorunterbrecher geöffnet sind.

11. Verfahren nach einem der vorhergehenden Ansprüche, wobei der Generator ein Generator mit einem einzelnen Wicklungssatz ist oder ein Generator (11) mit mehreren Wicklungssätzen ist, wobei in dem Fall eines Generators mit mehreren Wicklungssätzen, das Hilfsumsetzersystem (9) nur mit einem Wicklungssatz des Generators (11) verbunden ist.

12. Verfahren nach einem der vorhergehenden Ansprüche, wobei der Generator ein Permanentmagnet-Synchrongenerator, der insbesondere einen äußeren Rotor mit mehreren Permanentmagneten aufweist, oder ein Induktionsgenerator ist.

13. Verfahren zum Aufbewahren und/oder Transportieren einer Windturbinen-Anordnung (1, 101), die einen Antriebsstrang (5) mit einem Rotor (13), einem Generator (11), der an den Rotor gekoppelt ist, einem Lagersystem (3), das mindestens eine Komponente des Antriebsstrangs drehbar trägt, und ein Hilfsumsetzersystem (7, 9) umfasst, das das Durchführen eines Verfahrens nach einem der vorhergehenden Ansprüche umfasst.

14. Anordnung (1) zum Behandeln eines Lagersystems (3), das in einem Windturbinen-Antriebsstrang (5) enthalten ist, während des Aufbewahrens oder Transports, wobei der Antriebsstrang (5) einen Rotor (13), der an einen Generator (11) gekoppelt ist, umfasst, wobei die Anordnung Folgendes umfasst:
ein Antriebssystem (7), das ein Hilfsumsetzersystem (9) umfasst, das angeschlossen ist, um, durch Zuführen eines Antriebsleistungsstroms (63), den Generator (11) zu steuern, als ein Motor zu arbeiten, um ein Antriebsmoment zu liefern, das den Rotor (13) veranlasst, sich mindestens eine Umdrehung zu drehen, wobei die Anordnung insbesondere eine Maschinengondel (101) umfasst.

## Revendications

1. Procédé de traitement d'un système de palier (3) compris dans une chaîne cinématique d'éolienne (5) pendant le stockage et/ou le transport, la chaîne cinématique (5) comprenant un rotor (13) couplé à un générateur (11), le procédé comprenant :
commander le générateur (11) pour délivrer un couple d'entraînement amenant le rotor (13) à tourner d'au moins un demi-tour ou d'au moins un tour, en particulier de plus de 100, ou de plus de 1000 tours,
dans lequel la commande du générateur comprend :
la fourniture d'un flux de puissance d'entraînement (63) d'un système de convertisseur auxiliaire (7, 9) au générateur (11) .

2. Procédé selon la revendication précédente,
dans lequel, en faisant tourner le rotor (13), au moins un rouleau et/ou une bille est déplacé(e) par rapport à un chemin de roulement d'au moins un composant du système de palier (3), et/ou
dans lequel le couple d'entraînement généré par le générateur de manière continue et/ou par paliers et/ou par va-et-vient fait tourner le rotor pendant au moins 20%, en particulier entre 50% et 100%, du temps de transport et/ou du temps de stockage.

3. Procédé selon l'une des revendications précédentes, dans lequel le couple d'entraînement généré par le générateur fait tourner le rotor (13) avec une vitesse de rotation prédéterminée, en particulier comprise entre 0,1 tr/min et 5 tr/min, encore plus particulièrement entre 1 tr/min et 2 tr/min.

4. Procédé selon l'une des revendications précédentes, dans lequel le système de convertisseur auxiliaire (7) comprend un convertisseur de fréquence auxiliaire (9) qui est alimenté par une alimentation électrique externe (65), en particulier une alimentation de système de transport, encore plus particulièrement une alimentation de navire,
dans lequel en particulier un flux de courant alternatif triphasé (67) ayant une fréquence prédéterminée, encore plus particulièrement de 50 Hz ou 60 Hz, est fourni au convertisseur de fréquence auxiliaire (9).

5. Procédé selon l'une des revendications précédentes, dans lequel le convertisseur de fréquence auxiliaire (9) comprend des commutateurs commandables connectés entre des bornes CC au niveau d'une section d'entrée et comprend des commutateurs commandables additionnels connectés entre des bornes CC au niveau d'une section de sortie, dans lequel les états de conductance des commutateurs commandables et des commutateurs commandables additionnels sont commandés par un dispositif de commande de convertisseur auxiliaire (14) fournissant des signaux de commande, en particulier des signaux de modulation de largeur d'impulsion, aux grilles des commutateurs commandables et des commutateurs commandables additionnels.

6. Procédé selon l'une des revendications précédentes, dans lequel le système de convertisseur auxiliaire (9) est différent de (complémentaire à) ou comprend au moins un convertisseur d'éolienne (27, 29) pouvant être connecté au générateur (11) et utilisé pendant le fonctionnement normal de l'éolienne, pour convertir un flux de puissance à fréquence variable, généré par le générateur en raison de l'impact du vent sur une pale de rotor connectée au rotor, en un flux de puissance à fréquence sensiblement fixe à fournir à un réseau électrique, en particulier via un ou plusieurs transformateurs,
dans lequel le système de convertisseur auxiliaire (9) a une capacité comprise entre 1% et 20% d'une capacité de chaque convertisseur d'éolienne (27, 29).

7. Procédé selon l'une des revendications précédentes, dans lequel le système de palier (3) comprend au moins l'un parmi :
un palier principal de rotor primaire et/ou secondaire (4) ;
un palier de boîte de transmission ;
un palier de générateur.

8. Procédé selon l'une des revendications précédentes, dans lequel le procédé est mis en oeuvre lors du transport d'une nacelle (101) chargée sur un châssis de transport (102), la nacelle comprenant le générateur (11), le rotor (13), la chaîne cinématique (5) et le système de palier (3),
le système de convertisseur auxiliaire (9) étant en particulier agencé dans ou au niveau de la nacelle ou au niveau du châssis de transport.

9. Procédé selon la revendication précédente, dans lequel la nacelle comprend en outre :
au moins un convertisseur d'éolienne (27, 29), en particulier de multiples convertisseurs d'éolienne dans le cas d'un générateur à multiples jeux d'enroulements, chacun des convertisseurs d'éolienne pouvant être connecté au générateur (11) .

10. Procédé selon la revendication précédente, dans lequel chacun des convertisseurs d'éolienne (27, 29) peut être connecté au générateur via un disjoncteur de générateur respectif (23, 25), dans lequel, au cours du procédé, les disjoncteurs de générateur sont ouverts.

11. Procédé selon l'une des revendications précédentes, dans lequel le générateur est un générateur à jeu d'enroulements unique ou un générateur à jeux d'enroulements multiples (11), dans lequel dans le cas d'un générateur à jeux d'enroulements multiples, le système de convertisseur auxiliaire (9) n'est connecté qu'à un seul jeu d'enroulements (19) du générateur (11) .

12. Procédé selon l'une des revendications précédentes, dans lequel le générateur est un générateur synchrone à aimants permanents, en particulier ayant un rotor externe à plusieurs aimants permanents, ou un générateur à induction.

13. Procédé de stockage et/ou de transport d'un agencement d'éolienne (1, 101) comprenant une chaîne cinématique (5) avec un rotor (13), un générateur (11) couplé au rotor, un système de palier (3) supportant en rotation au moins un composant de la chaîne cinématique, et un système de convertisseur auxiliaire (7, 9), comprenant la mise en oeuvre d'un procédé selon l'une des revendications précédentes.

14. Agencement (1) pour traiter un système de palier (3) compris dans une chaîne cinématique d'éolienne (5) pendant le stockage et/ou le transport, la chaîne cinématique comprenant un rotor (13) couplé à un générateur (11), l'agencement comprenant :
un système d'entraînement (7), comprenant un système de convertisseur auxiliaire (9), connecté pour commander le générateur (11), en lui fournissant un flux de puissance d'entraînement (63), pour fonctionner comme moteur, pour délivrer un couple d'entraînement amenant le rotor (13) à tourner d'au moins un tour, l'agencement comprenant en particulier une nacelle (101).
